# EUROPÄISCHE PATENTSCHRIFT

(11) **EP 2 755 836 B1**
(45) Veröffentlichungstag und Bekanntmachung des Hinweises auf die Patenterteilung: **15.03.2017**
(21) Anmeldenummer: 12746108.5
(22) Anmeldetag: 15.08.2012
(51) Int. Cl.: B60J 5/06, B60J 5/04, E05D 15/10

(54) **FAHRZEUG MIT SCHIEBETÜRSYSTEM**
VEHICLE HAVING A SLIDING DOOR SYSTEM
VÉHICULE MUNI D'UN SYSTÈME DE PORTE COULISSANTE

(30) Priorität: 12.09.2011 DE 102011082526
(43) Veröffentlichungstag der Anmeldung: 23.07.2014
(73) Patentinhaber: Ford Global Technologies, LLC, Dearborn, MI 48126 (US)
(72) Erfinder: VAN LEEUWEN, Olaf, 50735 Köln (DE); VAN OIRSCHOT, Dirk, 41366 Schwalmtal (DE)
(74) Vertreter: Dörfler, Thomas
(86) Internationale Anmeldenummer: PCT/EP2012/065932
(87) Internationale Veröffentlichungsnummer: WO 2013/037587

(56) Entgegenhaltungen:
- EP-A1- 2 329 976
- FR-A1- 2 878 553
- US-A1- 2010 078 961

## Beschreibung

Die Erfindung betrifft ein Fahrzeug mit mindestens einer Schiebetür, die in Fahrtrichtung hinter einer Karosseriesäule angeordnet ist, einem um die Fahrzeugöffnung, die mit der Schiebetür zu verschließen ist, verlaufenden Rahmen, einem im Bereich der Schiebetür vorgesehenen, fest mit dem Fahrzeug verbundenen Schienensystem aus einer oberen und einer unteren Führungsschiene, an der Schiebetür vorgesehenen Gleitschlitten, die über je einen Tragarm mit der jeweiligen Schiebetür verbunden sind und die auf den Führungsschienen verschieblich geführt sind, sowie einem Seitenaufprallschutz im Bereich der Schiebetür.

Als Seitenaufprallschutz sind bei Fahrzeugen bereits verschiedene Systeme bekannt. Beispielsweise sind besondere Verstärkungen der Karosserie vorgesehen, und es werden in vielen Fällen auch Seitenairbags an den seitlichen Innenwänden eines Fahrzeugs angebracht.

Bei Fahrzeugen mit Schiebetüren besteht im Falle eines Seitenaufpralls zusätzlich die Gefahr, dass die Tür aus ihrer Führung springt und sich auch unter Umständen selbsttätig öffnet, sodass die Fahrzeuginsassen dadurch zusätzlich gefährdet werden.

Um im Falle eines Seitenaufpralls zu verhindern, dass die von dem Seitenaufprall betroffene Schiebetür aufspringt, ist es bereits aus der EP 2 329 976 A1 bekannt, an der zu öffnenden Seite der Schiebetür eine Zentrierung vorzusehen, die das Türende festlegt. Die Endfläche der Zentrierung drückt sich dabei gegen einen federbelasteten Bolzen. Ferner ist an der Zentrierung ein Fanghaken vorgesehen, der am vorderen Ende der Zentrierung angeordnet ist. Der Fanghaken ist in Fahrzeuglängsrichtung nach innen gerichtet. Bei geschlossener Schiebetür liegt ihm ein karosseriefestes Gegenstück gegenüber. Wenn bei einem Seitenaufprall die Schiebetür nach innen verformt wird, gelangt der Fanghaken mit dem karosseriefesten Gegenstück in Anlage, wodurch eine Verankerung für die Schiebetür gebildet wird, die einer Verformung der Schiebetür nach innen einen Widerstand entgegensetzt.

Eine solche Verankerung wirkt zumindest bei einem extrem starken Seitenaufprall nicht zuverlässig, da sich der Fanghaken bei stärkerer Verformung aus dem karosseriefesten Gegenstück leicht lösen kann. Zudem wird durch dieses System nicht verhindert, dass die Schiebetür aus ihrer Führung springt und dann unkontrollierte Bewegungen, beispielsweise in Öffnungsrichtung, ausführt, die die Insassen des Fahrzeugs gefährden.

Ferner ist aus der FR 2 878 553 A1 bei einem Fahrzeug mit seitlicher Schiebetür ein Mechanismus bekannt, der bei einem Frontalaufprall wirksam wird und die Schiebetür in ihrer Lage blockiert. Das Blockiersystem wirkt dabei auf den in Fahrtrichtung vorn liegenden Gleitschlitten. Dieser ist mit einer vorspringenden Lasche versehen, die sich durch ein Fenster eines Wandteils hindurch erstreckt, das am Ende der jeweiligen Führungsschiene befestigt ist. Bei einer durch einen Frontalaufprall verursachten Verformung des Systems verhakt sich die Lasche in dem Fenster und verhindert dadurch, dass die Schiebetür aufspringen kann. Die Lasche wird dabei auf Zug beansprucht. Ein solches bekanntes System ist nicht sehr stabil, da die sich hinter dem Fenster verhakende Lasche eine Schwachstelle darstellt.

Der Erfindung liegt daher die Aufgabe zugrunde, ein Fahrzeug mit einem Schiebetürsystem auszustatten, welches selbst einem starken Seitenaufprall standhält und gewährleistet, dass sich die Schiebetür dabei nicht aus ihrer Führung löst und insbesondere sich nicht selbsttätig teilweise oder komplett öffnet.

Erfindungsgemäß wird diese Aufgabe dadurch gelöst, dass als Seitenaufprallschutz etwa in Höhe von mindestens einem Gleitschlitten ein fest mit der Fahrzeugwandung verbundenes Widerlager vorgesehen ist, dass das Widerlager als Zapfen ausgebildet ist, dass mindestens einer der Gleitschlitten oder der Tragarme mit einem Anschlag versehen ist und dass im Falle eines Seitenaufpralls, bei dem die äußere Fahrzeugwandung in Richtung auf den Fahrzeuginnenraum deformiert wird, der mit der Fahrzeugwandung verbundene Zapfen an dem Anschlag des Gleitschlittens bzw. des Tragarms zur Anlage kommt, wodurch der Gleitschlitten an der Führungsschiene gesichert und gleichzeitig die Schiebetür in ihrer Lage blockiert wird.

Die erfindungsgemäße Konstruktion schützt die Fahrzeuginsassen insbesondere gegen den am häufigsten auftretenden Seitenaufprall im Bereich der vorderen Tür bzw. im Bereich der mittleren Karosseriesäule, der sogenannten B-Säule. Bei dieser Art von Seitenaufprall werden sehr häufig die Führungsschlitten aus ihrer Führung gedrängt, sodass die Schiebetüren sich zumindest teilweise öffnen. Bei der erfindungsgemäßen Konstruktion wird dies sehr wirkungsvoll durch den Fangmechanismus verhindert, bei dem sich beim Nachinnendrücken der B-Säule das im Bereich der Außenwandung der Karosserie vorgesehene Widerlager allmählich dem an dem Gleitschlitten bzw. dem Tragarm vorgesehenen Anschlag nähert und dann an diesem zur Anlage kommt, wodurch der Gleitschlitten nicht nur fest in seiner Führung gehalten, sondern zusätzlich in seiner Lage fixiert wird, sodass sich die Schiebetür nicht nach hinten in die geöffnete Position bewegen kann.

Der erfindungsgemäße Seitenaufprallschutz, der aus dem Widerlager sowie dem Anschlag besteht, ist vorzugsweise sowohl für den oberen als auch für den unteren Bereich der Schiebetür vorgesehen. Häufig reicht aber auch bereits eine entsprechende Sicherung im unteren Bereich der Tür aus, indem ausschließlich der untere Gleitschlitten bei einem Seitenaufprall in seiner Lage fixiert wird. Zweckmäßig weisen die Führungsschienen an ihren in Fahrtrichtung vorn liegenden Bereichen zur Fahrzeugmitte hin verlaufende gekrümmte Enden auf.

Diese gekrümmten Enden der Führungsschienen greifen vorzugsweise in an der Fahrzeugkarosserie vorgesehene seitliche Taschen ein, die im Wesentlichen horizontal verlaufen und unmittelbar über dem Schweller angeordnet sind.

Der an dem jeweiligen Gleitschlitten bzw. Tragarm vorgesehene Anschlag kann als Fanghaken ausgebildet sein, der einen V-förmigen Aufnahmebereich aufweist. Das jeweilige als Zapfen ausgebildete Widerlager kommt dann im Falle eines Seitenaufpralls an dem Anschlag zur Anlage.

Der das Widerlager bildende Zapfen greift bei einem Seitenaufprall vorzugsweise in den V-förmigen Bereich des als Fanghaken ausgebildeten Anschlags ein und drückt den Gleitschlitten fest gegen das nach innen abgebogene Ende der Führungsschiene. Gleichzeitig wird aufgrund des Eingriffs des Zapfens in den V-förmigen Bereich des Fanghakens auch verhindert, dass sich der Gleitschlitten in eine geöffnete Position der Tür bewegen kann.

Der das Widerlager bildende Zapfen muss fest mit den Karosserieteilen verbunden sein. Der Zapfen ist dabei vorzugsweise zwischen dem Schweller und dem die Türöffnung umgebenden Rahmen angeordnet und stabil mit diesen Teilen verbunden.

Die Erfindung ist in der Zeichnung beispielhaft veranschaulicht und im Nachstehenden im Einzelnen anhand der Zeichnung beschrieben.

Es zeigen:
- Fig. 1:: eine Draufsicht auf einen horizontalen Schnitt durch einen Fahrzeugbereich um die mittlere Karosseriesäule (B-Säule) mit einer vorderen Schwenktür und einer hinteren Schiebetür,
- Fig. 2:: eine Seitenansicht des Fahrzeugausschnitts in Richtung des Pfeiles II gemäß Fig. 1, wobei jedoch die Türen weggelassen worden sind,
- Fig. 3: den gleichen Schnitt wie Fig. 1 bei geringfügiger Verformung des seitlichen Karosseriebereichs durch einen leichten Seitenaufprall und
- Fig. 4:: den gleichen Schnitt wie in Fig. 1 und 3, jedoch bei einer weitergehenden Verformung des seitlichen Karosseriebereichs durch einen stärkeren Seitenaufprall.

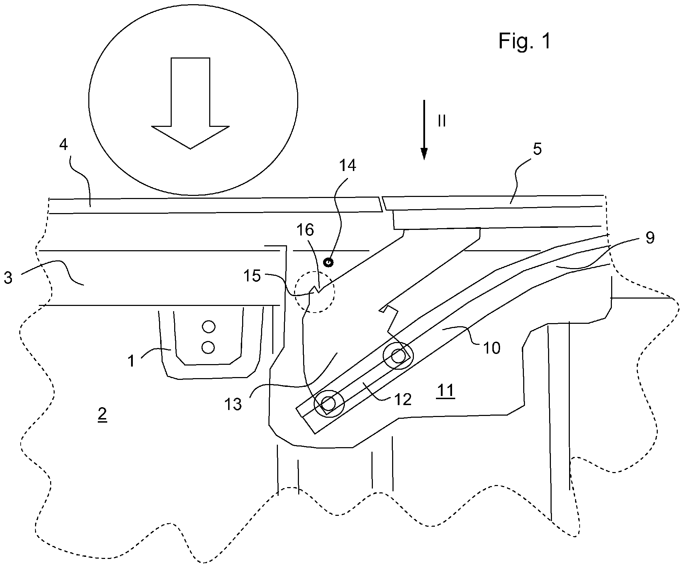

Der in Fig. 1 dargestellte Ausschnitt aus einem Fahrzeug zeigt den Bereich um eine mittlere Karosseriesäule 1 (B-Säule), die sich von einer Bodenplatte 2 aus im Wesentlichen vertikal nach oben erstreckt und das in der Zeichnung nicht dargestellte Fahrzeugdach trägt.

Der untere Bereich der B-Säule 1 grenzt unmittelbar an einen Schweller 3, der den seitlichen Abschluss des Fahrzeugs bildet.

Außerhalb des Schwellers 3 ist der hintere Abschnitt einer vorderen Schwenktür 4 sowie der vordere Teil einer hinteren Schiebetür 5 dargestellt.

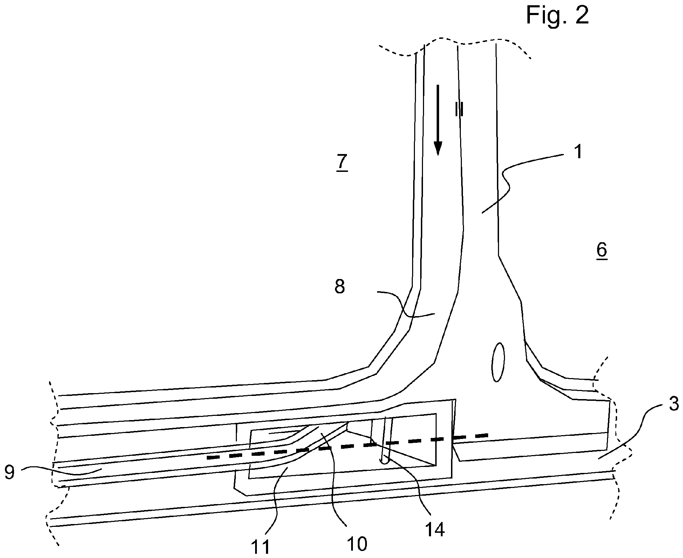

Bei der in Fig. 2 dargestellten Ansicht, bei der die Türen 4 und 5 weggelassen worden sind, sind lediglich die Türöffnungen zu sehen, und zwar die Türöffnung 6 der vorderen Schwenktür 4 sowie die Türöffnung 7 der hinteren Schiebetür 5.

Die beiden Türöffnungen 6 und 7 sind durch die B-Säule 1 voneinander getrennt. Die Türöffnung 7, die durch die hintere Schiebetür 5 zu verschließen ist, ist noch von einem Rahmen 8 umgeben. Wie weiterhin aus den Figuren 1 und 2 zu erkennen ist, ist eine untere Führungsschiene 9 vorgesehen, die in ihrem vorderen Bereich mit einem abgewinkelten Ende 10 versehen ist. Das abgewinkelte Ende 10 erstreckt sich in einer horizontalen Ebene zur Fahrzeugmitte hin und greift, wie insbesondere aus Fig. 2 zu erkennen ist, in eine seitliche Tasche 11 des Fahrzeugs ein. Die Tasche 11 ist zwischen dem Schweller 3 und dem Rahmen 8 angeordnet. Eine entsprechend ausgebildete Führungsschiene kann auch im oberen Bereich der Schiebetür angeordnet sein.

In Fig. 1 ist die Grundfläche der seitlichen Tasche 11 sowie das in die Tasche 11 eingreifende abgewinkelte Ende 10 der unteren Führungsschiene 9 zu erkennen.

Wie insbesondere in dieser Figur veranschaulicht, ist zur Führung des vorderen Endes der Schiebetür 5 ein Gleitschlitten 12 vorgesehen, der auf der Führungsschiene 9 verschieblich geführt ist. Der Gleitschlitten 12 ist über einen abgewinkelten Tragarm 13 mit dem in Fahrtrichtung vorn liegenden Ende der Schiebetür 5 starr verbunden.

Der eigentliche Seitenaufprallschutz, bei dem es bei der vorliegenden Erfindung in erster Linie ankommt, besteht aus zwei wesentlichen Teilen, und zwar einerseits aus einem fest mit den Karosserieteilen verbundenen Widerlager in Form eines Zapfens 14 und andererseits aus einem Anschlag 15, der an dem Tragarm 13 ausgebildet ist und im Falle eines Seitenaufpralls mit dem Zapfen 14 zusammenwirkt.

Wie insbesondere aus Fig. 2 zu erkennen ist, ist der Zapfen 14 innerhalb der seitlichen Tasche 11 angeordnet, und zwar seitlich außerhalb des abgewinkelten Endes 10 der Führungsschiene 9. Der Zapfen 14 ist mit den tragenden Teilen, die die seitliche Tasche 11 begrenzen, fest verbunden, und zwar vorzugsweise einerseits mit dem Schweller 3 und andererseits mit dem die Türöffnung 7 der Schiebetür 5 umgebenden Rahmen 8.

Wie insbesondere aus Fig. 1 zu erkennen ist, ist der mit dem Zapfen 14 zusammenwirkende Anschlag 15, der an dem Tragarm 13 angeordnet ist, als Fanghaken ausgebildet, der einen V-förmigen Aufnahmebereich 16 aufweist, in den der Zapfen 14 im Falle eines starken Seitenaufpralls eingreift.

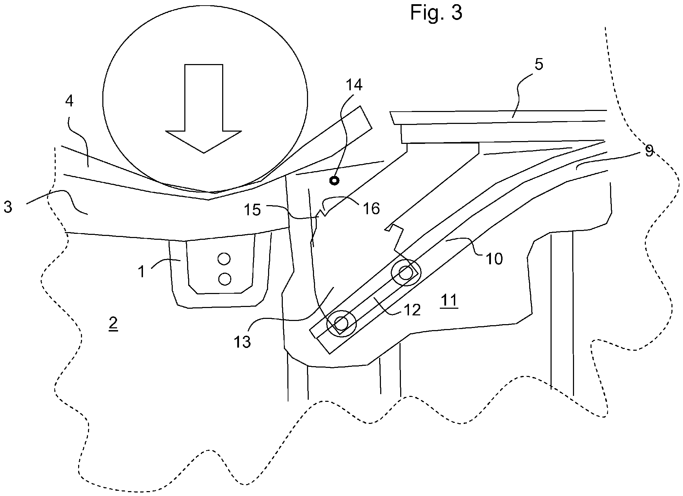

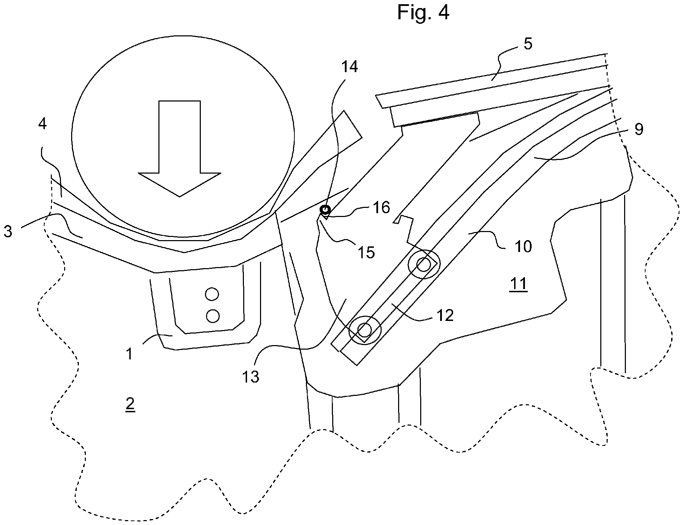

In den Figuren 3 und 4 ist die Simulation eines Seitenaufpralls dargestellt.

Gemäß Fig. 3 wird zunächst eine leichte Verformung der vorderen Schwenktür 4 sowie der dahinter befindlichen Karosserieteile, insbesondere der B-Säule, dargestellt. Bei diesem Verformungsgrad, der etwa einer Verformung von 80 mm entspricht, ist die hintere Schiebetür 5 einschließlich der Führungsschiene 9 sowie des Gleitschlittens 12 und des Tragarms 13 noch im Wesentlichen intakt. Der Zapfen 14 hat sich jedoch bei diesem Verformungszustand bereits dem an dem Tragarm 13 vorgesehenen Anschlag 15 etwas genähert. Bei diesem Deformationsgrad besteht noch nicht die Gefahr eines ungewollten Aufspringens der Schiebetür 5.

Erst bei fortschreitender Deformation, wie in Fig. 4 dargestellt, von ca. 150 mm erfährt auch die hintere Schiebetür 5 sowie die Führungsschiene 9 eine erhebliche Deformation, sodass die Gefahr besteht, dass der Gleitschlitten 12 aus der Führungsschiene 9 herausspringt und sich die Schiebetür 5 öffnet.

Wie aus Fig. 4 zu erkennen ist, legt sich bei diesem Deformationsgrad der Zapfen 14 an den Anschlag 15 des Tragarms 13 an und wird in dem V-förmigen Aufnahmebereich 16 des Anschlags 15 sicher festgehalten.

In dieser Konstellation drückt der Zapfen 14 den Tragarm 13 und somit den Gleitschlitten 12 zwar ein Stück in Richtung auf den Innenraum des Fahrzeugs, jedoch ist bei dieser Konstellation gewährleistet, dass sich der Gleitschlitten 12 nicht von der Führungsschiene 9 löst. Darüber hinaus bewirkt der Eingriff des starren Zapfens 14 in den V-förmigen Aufnahmebereich 16 des Anschlags 15, dass die Tür automatisch blockiert ist und sich nicht mehr in Öffnungsrichtung bewegen kann.

Durch diese neu entwickelte Schutzmaßnahme werden folglich zwei sehr wichtige Wirkungen erzielt, nämlich einerseits die Sicherung des Gleitschlittens an der Führungsschiene 9, sodass die Schiebetür 5 nicht aufspringen kann, und andererseits eine Blockierung der Tür in Öffnungsrichtung.

Diese sehr wichtige und zuverlässige Wirkung wird mit einfachsten Mitteln erzielt, die die Herstellungskosten des Fahrzeugs nur unwesentlich erhöhen.

### BEZUGSZEICHENLISTE

- 1: mittlere Karosseriesäule (B-Säule)
- 2: Bodenplatte
- 3: Schweller
- 4: vordere Schwenktür
- 5: hintere Schiebetür
- 6: Türöffnung der vorderen Schwenktür
- 7: Türöffnung der hinteren Schiebetür
- 8: Rahmen
- 9: untere Führungsschiene
- 10: abgewinkeltes Ende
- 11: seitliche Tasche
- 12: Gleitschlitten
- 13: Tragarm
- 14: Widerlager (Zapfen)
- 15: Anschlag
- 16: V-förmiger Aufnahmebereich

## Patentansprüche

1. Fahrzeug mit mindestens einer Schiebetür (5), die in Fahrtrichtung hinter einer Karosseriesäule (1) angeordnet ist, einem um die Türöffnung (7), die mit der Schiebetür (5) zu verschließen ist, verlaufenden Rahmen (8), einem im Bereich der Schiebetür (5) vorgesehenen, fest mit dem Fahrzeug verbundenen Schienensystem aus einer oberen und einer unteren Führungsschiene (9), an der Schiebetür (5) vorgesehenen Gleitschlitten (12), die über je einen Tragarm (13) mit der Schiebetür (5) verbunden sind und die auf den Führungsschienen (9) verschieblich geführt sind, sowie einem Seitenaufprallschutz im Bereich der Schiebetür (5), wobei als Seitenaufprallschutz etwa in der Höhe von mindestens einem Gleitschlitten (12) ein fest mit der Fahrzeugwandung verbundenes Widerlager vorgesehen ist, wobei mindestens einer der Gleitschlitten (12) oder Tragarme (13) mit einem Anschlag (15) versehen ist, **dadurch gekennzeichnet, dass** das Widerlager als Zapfen (14) ausgebildet ist und dass im Falle eines Seitenaufpralls, bei dem die äußere Fahrzeugwandung in Richtung auf den Fahrzeuginnenraum deformiert wird, der mit der Fahrzeugwandung verbundene Zapfen (14) an dem Anschlag (15) des Gleitschlittens (12) bzw. des Tragarms (13) zur Anlage kommt, wodurch der Gleitschlitten (12) an der Führungsschiene (9) gesichert und gleichzeitig die Schiebetür (5) in ihrer Lage blockiert wird.

2. Fahrzeug nach Anspruch 1, **dadurch gekennzeichnet, dass** das Widerlager (14) in Höhe der unteren Führungsschiene (9) und des unteren Gleitschlittens (12) angeordnet ist.

3. Fahrzeug nach Anspruch 1, **dadurch gekennzeichnet, dass** die Führungsschienen (9) an ihren in Fahrtrichtung vorn liegenden Bereichen zur Fahrzeugmitte hin verlaufende gekrümmte Enden (10) aufweisen.

4. Fahrzeug nach einem der Ansprüche 1 bis 3, **dadurch gekennzeichnet, dass** die gekrümmten Enden (10) der Führungsschienen (9) in seitliche Taschen (11) des Fahrzeugs eingreifen.

5. Fahrzeug nach einem der Ansprüche 1 bis 4, **dadurch gekennzeichnet, dass** der an dem jeweiligen Gleitschlitten (12) bzw. Tragarm (13) vorgesehene Anschlag (15) als Fanghaken ausgebildet ist, der einen V-förmigen Aufnahmebereich (16) aufweist.

6. Fahrzeug nach einem der Ansprüche 1 bis 5, **dadurch gekennzeichnet, dass** der das Widerlager bildende Zapfen (14) bei einem Seitenaufprall in den V-förmigen Aufnahmebereich des Anschlags (15) eingreift.

7. Fahrzeug nach Anspruch 6, **dadurch gekennzeichnet, dass** der das Widerlager bildende Zapfen (14) zwischen dem Schweller (3) und dem die Türöffnung (7) der Schiebetür (5) umgebenden Rahmen (8) angeordnet und stabil mit diesen verbunden ist.

## Claims

1. Vehicle with at least one sliding door (5) which is arranged behind a body pillar (1) in the direction of travel, a frame (8) running around the door opening (7) which can be closed by the sliding door (5), a rail system which is provided in the region of the sliding door (5), is connected fixedly to the vehicle and consists of an upper and a lower guide rail (9), sliding carriages (12) which are provided on the sliding door (5), are connected to the sliding door (5) via a respective supporting arm (13) and are guided displaceably on the guide rails (9), and side impact protection in the region of the sliding door (5), **characterized in that** an abutment which is fixedly connected to the vehicle wall is provided approximately level with at least one sliding carriage (12) as the side impact protection, **characterized in that** at least one of the sliding carriages (12) or supporting arms (13) is provided with a stop (15), **characterized in that** the abutment is designed as a pin (14) and **in that**, in the event of a side impact, in which the outer vehicle wall is deformed in the direction of the vehicle interior, the pin (14) which is connected to the vehicle wall comes to bear against the stop (15) of the sliding carriage (12) or of the supporting arm (13), as a result of which the sliding carriage (12) is secured on the guide rail (9) and the position of the sliding door (5) is simultaneously blocked.

2. Vehicle according to Claim 1, **characterized in that** the abutment (14) is arranged level with the lower guide rail (9) and the lower sliding carriage (12).

3. Vehicle according to Claim 1, **characterized in that** those regions of the guide rails (9) which are located at the front in the direction of travel have curved ends (10) running toward the center of the vehicle.

4. Vehicle according to one of Claims 1 to 3, **characterized in that** the curved ends (10) of the guide rails (9) engage in lateral pockets (11) of the vehicle.

5. Vehicle according to one of Claims 1 to 4, **characterized in that** the stop (15) provided on the respective sliding carriage (12) or supporting arm (13) is designed as a catch hook which has a V-shaped receiving region (16).

6. Vehicle according to one of Claims 1 to 5, **characterized in that**, in the case of a side impact, the pin (14) forming the abutment engages in the V-shaped receiving region of the stop (15).

7. Vehicle according to Claim 6, **characterized in that** the pin (14) forming the abutment is arranged between the sill (3) and the frame (8) surrounding the door opening (7) of the sliding door (5) and is connected stably to said sill and frame.

## Revendications

1. Véhicule avec au moins une porte coulissante (5), disposée dans la direction de conduite derrière un montant de carrosserie (1), avec un cadre (8) s'étendant autour de l'ouverture de porte (7) se fermant avec la porte coulissante (5), avec un système de rails prévu dans la région de la porte coulissante (5) et relié fixement au véhicule, ledit système étant composé d'un rail de guidage (9) supérieur et inférieur, de coulisseaux glissants (12) prévus au niveau de la porte coulissante (5) et reliés à la porte coulissante (5) via respectivement un bras porteur (13) et guidés de façon coulissante sur les rails de guidage (9), ainsi qu'avec une protection antichocs latéraux dans la région de la porte coulissante (5), la protection antichocs latéraux utilisée étant un contre-palier relié fixement à la paroi de véhicule approximativement à la hauteur d'au moins un coulisseau glissant (12), au moins un des coulisseaux glissants (12) ou des bras porteurs (13) étant pourvu d'une butée (15), **caractérisé en ce que** le contre-palier est réalisé sous la forme d'un tenon (14) et qu'en cas de choc latéral dans lequel la paroi extérieure de véhicule est déformée en direction de l'habitacle de véhicule, le tenon (14) relié à la paroi de véhicule vient au contact de la butée (15) du coulisseau glissant (12) et/ou du bras porteur (13), amenant à sécuriser le coulisseau glissant (12) au rail de guidage (9) et à bloquer simultanément la porte coulissante (5) dans sa position.

2. Véhicule selon la revendication 1, **caractérisé en ce que** le contre-palier (14) est disposé à hauteur du rail de guidage (9) inférieur et du coulisseau glissant (12) inférieur.

3. Véhicule selon la revendication 1, **caractérisé en ce que** les rails de guidage (9) comportent, au niveau de leurs régions reposant en avant dans la direction de conduite, des extrémités (10) incurvées s'étendant en direction du milieu de véhicule.

4. Véhicule selon l'une quelconque des revendications 1 à 3, **caractérisé en ce que** les extrémités (10) incurvées des rails de guidage (9) s'imbriquent dans des poches (11) latérales du véhicule.

5. Véhicule selon l'une quelconque des revendications 1 à 4, **caractérisé en ce que** la butée (15) prévue au niveau du coulisseau glissant (12) et/ou du bras porteur (13) respectif est réalisée sous la forme d'un crochet d'arrêt comportant une région réceptrice en forme de V (16).

6. Véhicule selon l'une quelconque des revendications 1 à 5, **caractérisé en ce que** le tenon (14) formant le contre-palier s'engrène dans une région réceptrice en forme de V de la butée (15) en cas de choc latéral.

7. Véhicule selon la revendication 6, **caractérisé en ce que** le tenon (14) formant le contre-palier est disposé entre le bas de caisse (3) et le cadre (8) entourant l'ouverture de porte (7) de la porte coulissante (5) et est relié stablement à lui.
